# EUROPEAN PATENT APPLICATION

(11) **EP 2 317 077 A2**
(43) Date of publication of application: **04.05.2011**
(21) Application number: 10188481.5
(22) Date of filing: 22.10.2010
(51) Int. Cl.: F01D 5/14

(54) **Turbine airfoil-sidewall integration**

(30) Priority: 28.10.2009 US 607371
(71) Applicant: General Electric Company, Schenectady, NY 12345 (US)
(72) Inventor: Maddaus, Alan D., Schenectady, NY 12345 (US)
(74) Representative: Gray, Thomas

(57) **Abstract**

A bucket 700 including airfoil 770 that accounts for the radial variation of inlet flow angle for working fluid 750, 755 with the boundary layer of flow adjacent to the inner sidewall 701 and outer sidewall 703. Local chambering of the airfoil 770 in the region 707, 708 of the sidewalls 701, 703 provides an airfoil and fillet 705, 706 with an shape for efficiently accommodating the radial distribution the inlet flow angle for the working fluid in the sidewall region.

## Description

### BACKGROUND OF THE INVENTION

The invention relates generally to turbine blades and to a turbine incorporating the blade. While the invention is primarily concerned with steam and gas turbines, it is also applicable to other turbines and compressors. The term "turbine" is used to include machines of this kind having airfoil blades. The invention is more specifically related to the interface of turbine airfoils with sidewalls for improving aerodynamic performance of the blade.

Turbine efficiency is of great importance, particularly in large installations where a fractional increase in efficiency can produce very large cost savings. Considerable resources are continually expended into research on blade design as this is a critical component with respect to overall performance of the turbine.

In a gas turbine engine, air is pressurized in a compressor and mixed with fuel in a combustor for generating hot combustion gases. Turbine stages extract energy from the combustion gases to power the compressor, while also powering an upstream fan in a turbofan aircraft engine application, or powering an external drive shaft for marine and industrial applications. In a steam turbine, steam is utilized to power the turbine stages.

A turbine may include one or more stages of rotor blades and corresponding turbine nozzles. Each turbine nozzle includes a row of stator vanes having radially outer and inner sidewalls in the form of arcuate bands that support the vanes. Correspondingly, the turbine rotor blades include airfoils integrally joined to radially inner sidewalls or platforms supported in turn by corresponding dovetails which mount the individual blades in dovetail slots formed in the perimeter of the supporting rotor disk. An annular shroud surrounds the radially outer tips of the rotor airfoils in each turbine stage. The stator vanes and rotor blades have corresponding airfoils including generally concave pressure sides and generally convex suction sides extending axially in chord between opposite leading and trailing edges. Adjacent vanes and adjacent blades form corresponding flow passages therebetween bound by the radially inner and outer sidewalls.

During operation, the working fluid flows axially downstream through the respective flow passages defined between the stator vanes and rotor blades. The aerodynamic contours of the vanes and blades, and corresponding flow passages therebetween, are precisely configured for maximizing energy extraction from the combustion gases which in turn rotate the rotor from which the blades extend.

The complex three-dimensional (3D) configuration of the vane and blade airfoils is tailored for maximizing efficiency of operation, and varies radially in span along the airfoils as well as axially along the chords of the airfoils between the leading and trailing edges. Accordingly, the velocity and pressure distributions of the working fluid over the airfoil surfaces, as well as within the corresponding flow passages, also vary.

Undesirable pressure losses in the working fluid flowpaths therefore correspond with undesirable reduction in overall turbine efficiency. For example, the working fluid enters the corresponding rows of vanes and blades in the flow passages therebetween and is necessarily split at the respective leading edges of the airfoils.

The locus of stagnation points of the incident working fluid extends along the leading edge of each airfoil, and corresponding boundary layers are formed along the pressure and suction sides of each airfoil, as well as along each radially outer and inner sidewall, which collectively bound the four sides of each flow passage. In the boundary layers, the local velocity of the working fluid varies from zero along the sidewalls and airfoil surfaces to the unrestrained velocity in the working fluid where the boundary layers terminate.

While the main span of the airfoils for the nozzles and rotating blades utilize the complex 3D configurations described above and consequently promote efficiency, the regions of the airfoil adjacent to the sidewalls are less adapted to local aerodynamic conditions and incur significantly greater losses compared to the main spans. Accordingly, there is a need to configure the regions of airfoils adjacent to the sidewalls to promote greater airfoil performance.

### BRIEF DESCRIPTION OF THE INVENTION

The present invention relates to a design for turbine bucket or nozzle airfoils that accounts for the radial variation of inlet flow angle with the boundary layer of flow adjacent to the inner and outer sidewalls.

According to a first aspect of the present invention, a turbine stage is provided. The turbine stage includes a row of airfoils integrally joined to corresponding sidewalls and spaced laterally apart to define respective flow passages therebetween for channeling a working fluid. Each of the airfoils includes a concave pressure side and a laterally opposite convex suction side. The airfoils extend in chord between opposite leading and trailing edges. Each of the airfoils blends with the sidewalls in an arcuate fillet. A region of the airfoils in proximity to the corresponding sidewall and the associated arcuate fillet form a surface optimized according to a radial variation in inlet flow angle of the working fluid in proximity to the region.

According to a second aspect of the present invention, a turbine including a turbine casing; a rotor; a stator; and a row of airfoils is provided. Each airfoil is integrally joined to corresponding sidewalls and spaced laterally apart to define respective flow passages therebetween for channeling a working fluid. Each airfoil may include a concave pressure side and a laterally opposite convex suction side, extending in chord between opposite leading and trailing edges. Each airfoil blends with the sidewalls in an arcuate fillet. A region of the airfoils, in proximity to the corresponding sidewall and the associated arcuate fillet, forms a surface adapted to optimize airfoil performance according to a radial variation in inlet flow angle of the working fluid in proximity to the region.

### BRIEF DESCRIPTION OF THE DRAWING

There follows a detailed description of embodiments of the invention by way of example only with reference to the accompanying drawings, in which:
FIG. 1 illustrates a side view of a simplified series turbine stages formed of nozzles and buckets;
FIG. 2 illustrates a top view of working fluid flow between the nozzle and bucket of a turbine stage, including an associated velocity triangle;
FIG. 3 illustrates test data for stage angle exit flow angle distribution taken for a turbine stage;
FIG. 4 illustrates a prior art airfoil with no fillets;
FIG. 5 illustrates a concentric fillet of fixed radius on a nozzle as used in prior art;
FIG. 6 illustrates an embodiment for an inventive fillet aligned to near-wall flow for a turbine blade; and
FIG. 7 illustrates an embodiment of an inventive airfoil that includes continuous shape variation from the airfoil to the sidewalls.

### DETAILED DESCRIPTION OF THE INVENTION

The following embodiments of the present invention have many advantages, including improvement of aerodynamic performance of the airfoil region for turbine nozzles and blades in proximity to the sidewalls, resulting in improvement in the turbine performance.

Sidewall viscous flow effects result in blade row inlet flow angles substantially different those found radially outward from the working fluid path inner diameter or inward from the outer diameter. This causes the flow to likewise deviate from the design flow angles, which are generally selected without regard to wall boundary layer behavior. Deviations in flow angle are associated with energy losses and reduced turbine performance. The invention modifies the design of turbine stationary or moving airfoils near the sidewalls of the gas or steam path to optimize the airfoil geometry with respect to the variation in inlet flow angle immediately adjacent to the walls. This modification results in near wall airfoil sections that provide a varying optimum entrance angle to match the predicted flow angle. The airfoil sections are integrated with the fillet radii at the wall-airfoil intersection, but may extend radially beyond the fillet. The resulting airfoil integral sidewall component will have a distinctive appearance.

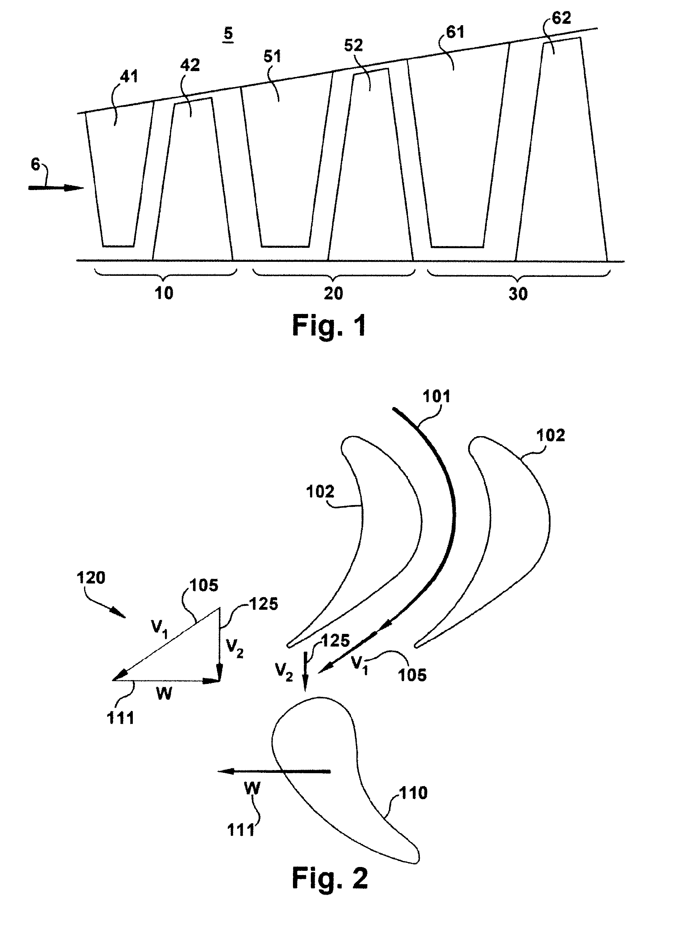

FIG. 1 illustrates a simplified side view for series turbine stages 5 formed of nozzles and buckets. A working fluid 6 flows axially through nozzle 41 and bucket 42 of stage a first stage 10, through nozzle 51 and bucket 52 of second stage 20 and through nozzle 61 and bucket 62 of third stage 30. It should be recognized that the number of stages for a given turbine or compressor would vary with the size and application.

FIG. 2 illustrates a top view of working fluid flow between the nozzle and bucket of one turbine stage, including an associated velocity triangle, at a selected radial location. The working fluid 101 passes through stationary nozzles 102 and is directed with a velocity V 105 in the direction of rotating blade 110. The blade 110 is rotating with absolute velocity W 111. Velocity triangle 120 shows vector value V₂ 125, the velocity of the inlet steam relative to the rotating blade 110 as V₁ 105-W 111. V₂ 125 is also shown in relation to the blade 110.

In airfoil design, the profile of the turbine blade is carried out to optimize stage performance based in part on the inlet angle of the working fluid with respect to the blade. While the inlet angle of the working fluid with respect to the blade is relatively constant, it has been determined that significant variation of inlet angle for the working fluid is encountered in the region of the blade in proximity to the sidewalls.

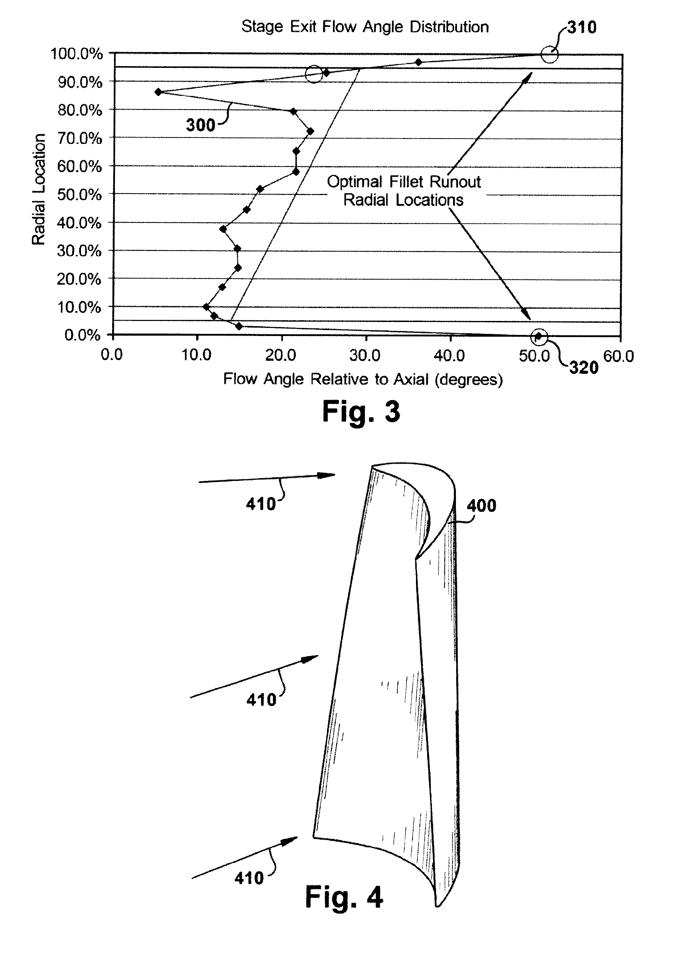

FIG. 3 illustrates test data for stage angle exit flow angle distribution 300 taken for a turbine stage. The ordinate provides a radial location of the measurement along the stage nozzle exit in percent. The abscissa provides a measured flow angle relative to axial in degrees. The rotating blade for the next turbine stage downstream from the nozzle assumes a stage entrance angle of about 20 degrees relative to axial. However, the flow angle 310 at the upper sidewall and the flow angle 320 at the lower sidewall are about 50 degrees relative to axial. Further the flow angle varies about 35 degrees over the bottom 5% of radial positioning near the hub and the flow angle varies about 30 degrees over the top 5% of radial positioning near the tip. While between radial locations of about 5% to about 95%, the flow angle varies only between about 10 degrees to about 20 degrees. Therefore, the flow loss associated with non-optimized inlet flow angle for the subsequent nozzle is concentrated in the fillet and near wall regions unless the regions in proximity to the sidewalls are modified to correct for the inlet flow deviation.

FIG. 4 illustrates a prior art airfoil 400 that receives inlet working fluid flow 510 but includes no fillets or special shaping in the region of upper and lower sidewalls (not shown) to account for inlet angle deviations of the working fluid.

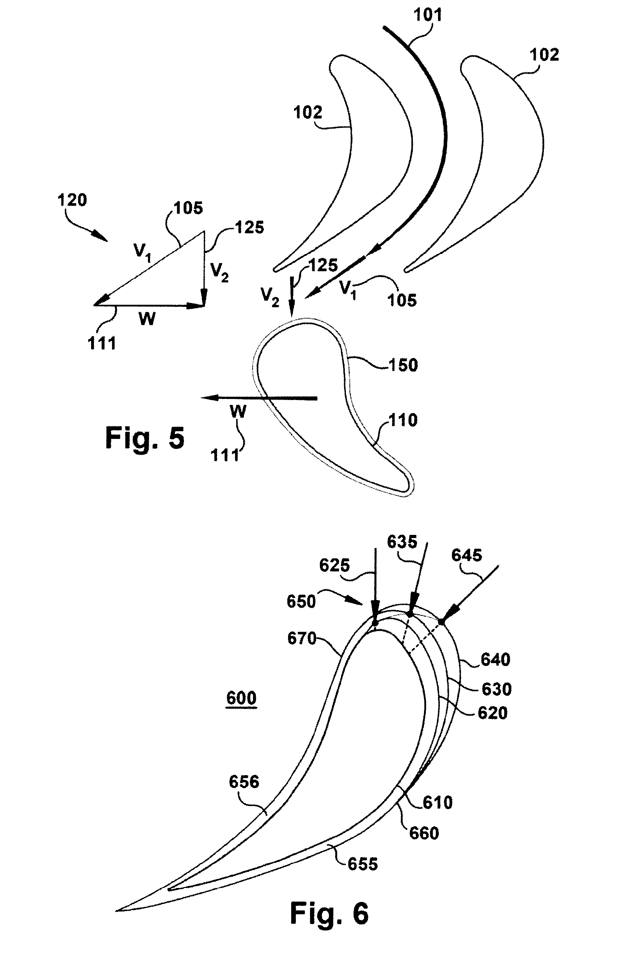

FIG. 5 illustrates a prior art airfoil 110 that includes a concentric fillet. The numbering of elements for FIG. 2 are retained for the numbering of FIG. 5. Prior art such as Haller et al. (US 5,906,474) has attempted to improve airfoil performance in the endwall regions by providing fillets with optimized radii. In Haller, the airfoils and their endwalls are formed integrally and machined to provide optimized fillets 150 between the blade surfaces and the endwalls with radii fixed as a proportion of throat dimension between adjacent blades. However, while the fillets of Haller improve over endwall regions with no fillets, they have not addressed optimization of fillet shape to reduce the near-wall inlet flow direction losses that are described above.

FIG. 6 illustrates an embodiment for an inventive fillet aligned to near-wall flow for a turbine blade. Turbine blade 600 includes illustrative axial-tangential profiles 610, 620, 630 and 640 for the blade airfoil and fillet at near wall heights descending from the airfoil proper 610 to the level of the sidewall 640. The profile of the fillet over the height range from the airfoil to the sidewall is optimized to the near-wall flow. Profile 620 is optimized to near-wall flow inlet 625 at a first radial height. Profile 630 is optimized to near-wall flow 635 at a second radial height. Profile 640 is optimized to near-wall flow 645 at the sidewall. However, computerized numerical machining permits continuous shaping of the near-wall interface of the airfoil and fillet with the sidewall to recognize inlet flow angle as a function of radial height. While the blended airfoil and fillet are optimally shaped about the leading edge 650, it may be seen that the blended profile may continue along one or both of the suction and pressure sides of the airfoil. The optimally shaped airfoil and filet in the end regions may taper into a single radius fillet along suction side 660 and pressure side 670.

The shaping of the profiles at the different near-wall radial distances is generally most critical for airfoil efficiency in the area of the leading edge 650. For purposes of machining time and cost, therefore, it may be desirable to merge the radial distance-dependent profiles into a single optimized radius fillet 655, 656 for a downstream section 660, 670 of the airfoil.

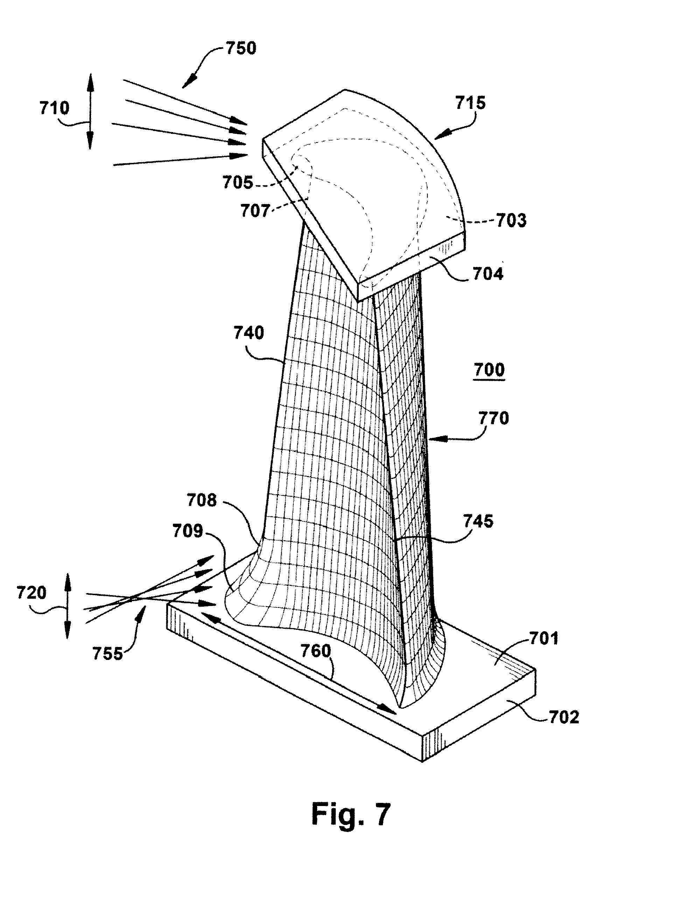

FIG. 7 illustrates an embodiment of an inventive blade 700 that includes continuous shape variation from the airfoil to the sidewall 701 of platform 702 and to sidewall 703 of shroud 704 wherein the shape variation is optimized to enhance airfoil performance with respect to inlet flow angle of a working fluid. Here the shape of the airfoil end regions 707, 708 is integrated with the shape of the fillets 705, 706 joining airfoil 700 to the sidewalls. The inventive shaping is preferentially performed over a radial region 710 of the airfoil of about 10% in proximity to the tip 715 and a radial region 720 in proximity to the sidewall 701 at the hub platform 702, although a smaller radial region or a larger radial region may be so shaped. The upper radial region 710 of airfoil 700 may be optimally shaped for the radial distribution of inlet flow angles 750 in this upper region. The lower radial region 720 may be optimally shaped for the radial distribution of inlet flow angles 755 at the lower region. Further, it is illustrated that the shaping may be preferentially applied in the region of the leading edge 740 up to about halfway along chord length 760 on the leading edge and the trailing edge 745 of the airfoil.

The invention as described above includes a design for turbine bucket or nozzle airfoils that accounts for the radial variation of inlet flow angle with the boundary layer of flow adjacent to the inner and outer sidewalls. This requires local chambering of the airfoil sections in the above regions with the primary objective of providing a continuous airfoil optimum entrance angle radial distribution. The prior art process for accomplishing this ignores the large deviation of inlet flow angle adjacent to the sidewalls, leading to the potential for higher energy losses in this already high loss region.

The invention has been described with respect to working fluid for a turbine stage, however it should be understood that it is equally applicable to steam turbine and gas turbine airfoils and includes compressor airfoils and turbine airfoils, as well as both nozzle airfoils and rotating blade airfoils. While various embodiments are described herein, it will be appreciated from the specification that various combinations of elements, variations or improvements therein may be made, and are within the scope of the invention.

For completeness, various aspects of the invention are now set out in the following numbered clauses:
1. A turbine stage comprising:
   a row of airfoils integrally joined to corresponding sidewalls and spaced laterally apart to define respective flow passages therebetween for channeling a working fluid;
   each of said airfoils including a concave pressure side and a laterally opposite convex suction side, and extending in chord between opposite leading and trailing edges; each of said airfoils blending with said sidewalls in an arcuate fillet, a region of said airfoils in proximity to the corresponding sidewall and the associated arcuate fillet forming a surface adapted to optimize a radial variation in inlet flow angle of the working fluid in proximity to the region.
2. The turbine stage according to clause 1, wherein said region of said airfoils in proximity to the corresponding sidewall comprises a radial location of about 5% airfoil length from the corresponding sidewall.
3. The turbine stage according to clause 1, wherein said region of said airfoils in proximity to the corresponding sidewall comprises a radial location of about 10% airfoil length from the corresponding sidewall.
4. The turbine stage according to clause 3, wherein said blending includes the leading edge of the airfoil on at least one of the suction side and on the pressure side.
5. The turbine stage according to clause 4 wherein said blending is provided from the leading edge of the airfoil to about 50% chord length on at least one of the suction side and on the pressure side of the airfoil.
6. The turbine stage according to clause 4, wherein said turbine stage comprises fixed nozzles.
7. The turbine stage according to clause 4, wherein said turbine stage comprises rotating blades.
8. The turbine stage according to clause 4, wherein said turbine stage comprises a stage of a gas turbine.
9. The turbine stage according to clause 4 wherein said turbine stage comprises a stage of a steam turbine.
10. The turbine stage according to clause 4, wherein said turbine stage comprises a stage of a compressor.
11. A turbine comprising:
   a turbine casing;
   a rotor;
   a stator; and
   a row of airfoils integrally joined to corresponding sidewalls and spaced laterally apart to define respective flow passages therebetween for channeling a working fluid; each of said airfoils including a concave pressure side and a laterally opposite convex suction side, and extending in chord between opposite leading and trailing edges; each of said airfoils blending with said sidewalls in an arcuate fillet, a region of said airfoils in proximity to the corresponding sidewall and the associated arcuate fillet forming a surface adapted to optimize a radial variation in inlet flow angle of the working fluid in proximity to the region.
12. A turbine stage according to clause 11, wherein said region of said airfoils in proximity to the corresponding sidewall comprises a radial location of about 5% airfoil length from the corresponding sidewall.
13. A turbine stage according to clause 11, wherein said region of said airfoils in proximity to the corresponding sidewall comprises a radial location of about 10 % airfoil length from the corresponding sidewall.
14. A turbine stage according to clause 12 wherein said blending includes the leading edge of the airfoil on at least one of the suction side and on the pressure side.
15. A turbine stage according to clause 12 wherein said blending is provided from the leading edge of the airfoil to about 50% chord length on at least one of the suction side and on the pressure side of the airfoil.
16. A turbine stage according to clause 12 wherein said turbine airfoils comprise fixed nozzles.
17. A turbine stage according to clause 12 wherein said turbine airfoils comprise rotating blades.
18. A turbine stage according to clause 12 wherein said turbine comprises a gas turbine.
19. A turbine stage according to clause 12 wherein said turbine comprises a steam turbine.
20. A turbine stage according to clause 12 wherein said turbine stage comprises a stage of a compressor.

## Claims

1. A blade (700) comprising:
an airfoil (770) integrally joined to sidewalls (701, 703) and including a concave pressure side (670) and a laterally opposite convex suction side (660), and extending in chord between opposite leading edge (740) and trailing edge (745) receiving an inlet flow angle of a working fluid (750, 755); wherein said airfoil (770) blends with said sidewalls (701, 703) in a region (710, 720) of an arcuate fillet (705, 706), in proximity to the corresponding sidewall (701, 703) around the leading edge (740) forming a surface advantageous to a radial variation in inlet flow angle of the working fluid (750, 755) in proximity to the region (710, 720).

2. The blade (700) according to claim 1, wherein said region (710, 720) of said airfoil in proximity to the corresponding sidewall (703, 701) comprises a radial location of about 5% airfoil length from the corresponding sidewall.

3. A blade (700) according to claim 1 or 2, wherein said region (710, 720) of said airfoil in proximity to the corresponding sidewall comprises about 10 % airfoil length from the corresponding sidewall.

4. The blade (700) according to any of the preceding claims, wherein said blending includes the leading edge (740) of the airfoil on at least one of the suction side (660) and on the pressure side (670).

5. The blade (700) according to claim 4, wherein said blending is provided from the leading edge (740) of the airfoil (770) to about 50% chord length (760) on at least one of the suction side (660) and on the pressure side (670) of the airfoil (770).

6. The blade (700) according to any of the preceding claims, wherein said airfoil (770) comprises a fixed stator nozzle.

7. The blade 700 according to any of the preceding claims, wherein said airfoil 770 comprises a rotating blade.

8. The blade (700) according to any of the preceding claims, comprising a blade for a gas turbine.

9. The blade (700) according to any of claims 1 to 7, comprising a blade for a steam turbine.

10. The blade (700) according to any of claims 1 to 7, comprising a blade for a compressor.
